# EUROPÄISCHE PATENTSCHRIFT

(11) **EP 3 403 051 B1**
(45) Veröffentlichungstag und Bekanntmachung des Hinweises auf die Patenterteilung: **09.10.2019**
(21) Anmeldenummer: 16700372.2
(22) Anmeldetag: 13.01.2016
(51) Int. Cl.: G01B 21/04, G05B 19/401

(54) **VERFAHREN UND VORRICHTUNG ZUM VORGEBEN VON VORGABEDATEN FÜR EINE VERMESSUNG EINES ZU VERMESSENDEN WERKSTÜCKS DURCH EIN KOORDINATENMESSGERÄT UND/ODER FÜR EINE AUSWERTUNG VON MESSERGEBNISSEN EINER VERMESSUNG EINES VERMESSENEN WERKSTÜCKS DURCH EIN KOORDINATENMESSGERÄT**
METHOD AND DEVICE FOR SPECIFYING SPECIFICATION DATA FOR A MEASUREMENT OF A WORKPIECE TO BE MEASURED BY MEANS OF A COORDINATE MEASURING DEVICE AND/OR FOR AN ANALYSIS OF MEASUREMENT RESULTS OF A MEASUREMENT OF A MEASURED WORKPIECE BY MEANS OF A COORDINATE MEASURING DEVICE
PROCÉDÉ ET DISPOSITIF POUR DÉFINIR DES DONNÉES DE CONSIGNE POUR UN MESURAGE D'UNE PIÈCE À MESURER AU MOYEN D'UN APPAREIL DE MESURE DE COORDONNÉES ET/OU POUR ÉVALUER DES RÉSULTATS DE MESURE D'UN MESURAGE D'UNE PIÈCE MESURÉE AU MOYEN D'UN APPAREIL DE MESURE DE COORDONNÉES

(43) Veröffentlichungstag der Anmeldung: 21.11.2018
(73) Patentinhaber: Carl Zeiss Industrielle Messtechnik GmbH, 73447 Oberkochen (DE)
(72) Erfinder: ROITHMEIER, Robert, 82418 Seehausen am Staffelsee (DE); KIRIN, Udo, 73527 Schwäbisch Gmünd (DE)
(74) Vertreter: Patentanwälte Bressel und Partner mbB
(86) Internationale Anmeldenummer: PCT/EP2016/050531
(87) Internationale Veröffentlichungsnummer: WO 2017/121468

(56) Entgegenhaltungen:
- EP-A1- 1 028 306
- DE-A1-102004 041 469
- HIRSCHI R ET AL: "SOFTWAREUNTERSTUETZTE TEILEMESSPROGRAMMIERUNG IN DER KOORDINATENMESSTECHNIK", FEINWERKTECHNIK + MESSTECHNIK, HANSER, MUNCHEN, DE, Bd. 99, Nr. 6, 1. Juni 1991 (1991-06-01), XP000231707, ISSN: 0340-1952

## Beschreibung

Die Erfindung betrifft ein Verfahren und eine Vorrichtung zum Vorgeben von Vorgabedaten für eine Vermessung eines zu vermessenden Werkstücks durch ein Koordinatenmessgerät und/oder für eine Auswertung von Messergebnissen einer Vermessung eines vermessenen Werkstücks durch ein Koordinatenmessgerät.

Bei der Vermessung von Werkstücken durch Koordinatenmessgeräte ist es bekannt, Prüfmerkmale festzulegen, die nach einer Vermessung eines Werkstücks aus den Messergebnissen bestimmt werden. Als Beispiele für Prüfmerkmale seien hier die Rundheit (Übereinstimmung mit einer idealen Kreisform) des Werkstücks oder einer Bohrung in dem Werkstück sowie die Parallelität von verschiedenen Oberflächenbereichen des Werkstücks genannt.

DE 198 21 371 A1 beschreibt ein Verfahren zum Vermessen eines Werkstücks, mit dem mit einem Koordinatenmessgerät ein automatisierter Messablauf durchgeführt werden kann. Das Verfahren sieht vor, bei der Festlegung des automatischen Messablaufes zunächst wenigstens ein Prüfmerkmal festzulegen, das anhand der im Messablauf aufgenommenen Messdaten auszuwerten ist. Dann wird wenigstens ein an dem Werkstück abzutastendes Geometrieelement zu dem festgelegten Prüfmerkmal zugeordnet und es werden Verfahrwege für einen Taster des Koordinatenmessgerätes zum Abtasten des Geometrieelementes definiert. Anschließend kann der Messablauf durchgeführt werden und durch Auswerten der im Messablauf aufgenommenen Messdaten das Prüfmerkmal bestimmt werden. DE 198 21 371 A1 erwähnt bereits, dass nach Festlegung des Prüfmerkmals oder nach Festlegung der Prüfmerkmale zur Festlegung des automatisierten Messablaufes alle zur Bestimmung des Prüfmerkmals oder der Prüfmerkmale notwendigen Detailparameter zugeordnet werden. Hierzu können auf einem Rechner Detailformulare geöffnet werden, in denen die entsprechenden Parameter von einem Benutzer definiert werden können.

Für das Vermessen und Bestimmen von Prüfmerkmalen unter Verwendung eines Koordinatenmessgerätes existieren vor der Vermessung des ersten Exemplars eines bestimmten Werkstücktyps in der Regel keine oder unvollständige Vorgabedaten, die die Festlegung eines Messablaufes und/oder die Bestimmung des Prüfmerkmals aus den durch Ausführung des Messablaufes erhaltenen Messdaten ermöglichen. Insbesondere sind die für die Festlegung des Messablaufes erforderlichen Messparameter, wie z.B. Art und/oder Größe eines bei der Vermessung des Werkstücks zu verwendenden Messsensors, Scanning-Geschwindigkeit, mit der das zu vermessende Werkstück scannend abgetastet wird (soweit zutreffend), Anzahl und/oder Verteilung von Oberflächenpunkten des zu vermessenden Werkstücks, die abgetastet werden sollen, und/oder eine relative Position des Messsensors zu einem abzutastenden Oberflächenpunkt und/oder Oberflächenbereich des zu vermessenden Werkstücks (z.B. eine Eintauchtiefe eines taktil antastenden Messsensors in einer Bohrung des Werkstücks), nicht vorgegeben, wenn der Messablauf festgelegt wird. Auch bezüglich der Auswertung der Messdaten zur Bestimmung des Prüfmerkmals sind in der Regel Vorgabedaten erforderlich zur Vorgabe der Auswertung der Messergebnisse, wie z.B. Daten, die ein Auswerteverfahren, ein Auswertekriterium, eine Filterung der Messergebnisse und/oder eine Behandlung von nicht plausiblen Messwerten (Ausreißern) vorgeben.

Vor der Vermessung eines Werkstücks bzw. vor der Auswertung der Messergebnisse ist es daher üblich, dass der Benutzer (Messtechniker) die Messparameter und Vorgaben zur Auswertung der Messergebnisse nach bestem Wissen und Gewissen selbst festlegt. Wird dasselbe Werkstück oder ein typgleiches Werkstück an einem anderen Ort oder von einem anderen Messtechniker vermessen, können sich die Ergebnisse bei der Bestimmung des Prüfmerkmals allein deshalb voneinander unterscheiden, weil unterschiedliche Messparameter und Vorgaben für die Auswertung der Messergebnisse gemacht wurden. Außerdem erfordert die Eingabe sämtlicher Messparameter und Auswertungsvorgaben einen hohen Zeitaufwand und ist fehleranfällig. Z.B. kann ein Messtechniker aus Versehen oder mangels Erfahrung einen nicht geeigneten Messsensor auswählen oder eine für eine angestrebte Genauigkeit nicht ausreichende Anzahl von abzutastenden Oberflächenpunkten festlegen. Die Erfindung ist nicht auf die Verwendung taktiler Sensoren beschränkt. Vielmehr bezieht sie sich auch auf berührungslos abtastende Messsensoren, wie zum Beispiel optische Sensoren.

EP 1 028 306 A1 beschreibt ein Verfahren zur Analyse und Erzeugung eines Teil-Programms zum Messen von Koordinaten und Oberflächeneigenschaften. Ein Teil-Programm wird analysiert und es werden verschiedene Messinformationen oder Messbedingungen zur Verwendung für tatsächliche Messungen aus einem Teil-Programm extrahiert und in einer Datenbank gespeichert. Die Datenbank kann eine Grundbedingungs-Datenbank aufweisen, in der Toleranzdaten gespeichert werden. Bei den Toleranzdaten kann es sich um Daten bezüglich allgemeiner Toleranzen und speziell definierter Toleranzen handeln. Z.B. in Bezug auf die Toleranz eines Kreisdurchmessers können die Toleranzdaten spezielle Daten wie den Typ der Toleranz, z.B. Winkel oder Durchmesser, sowie den unteren und oberen Grenzwert der Toleranz aufweisen. Wenn ein Teil-Programm erzeugt wird, können Bestimmungen bezüglich der Toleranz, dem Größenbereich eines geometrischen Modells und weiterer Angaben getroffen werden. Aus der Datenbank können Datensätze extrahiert werden, die mit den getroffenen Bedingungen übereinstimmen. Dann kann eine besondere statistische Verarbeitung betreffend der Anzahl der Messpunkte, der Messgeschwindigkeit und der Positionierungsgeschwindigkeit der extrahierten Datensätze durchgeführt werden. Außerdem kann Information, wie z.B. welcher Sensor zu benutzen ist, aus der Datenbank extrahiert werden, basierend auf festgelegten Bedingungen wie z.B. Größe eines geometrischen Modells und Toleranz.

Es ist eine Aufgabe der vorliegenden Erfindung, ein Verfahren zum Vorgeben von Vorgabedaten für die Vermessung eines Werkstücks durch ein Koordinatenmessgerät und/oder für eine Auswertung von Messergebnissen der Vermessung anzugeben, das den Aufwand für die Festlegung des Messablaufs und/oder die Auswertung der Messergebnisse reduziert, die Vergleichbarkeit von Ergebnissen bei der Bestimmung von Prüfmerkmalen erhöht und die Fehleranfälligkeit bei der Festlegung des Messablaufs und/oder bei der Auswertung der Messergebnisse verringert.

Diese Aufgabe wird gelöst durch ein Verfahren gemäß Anspruch 1 und eine Vorrichtung gemäß Anspruch 10.

Gemäß einem Grundgedanken der vorliegenden Erfindung wird die Vermessung des zu vermessenden Werkstücks durch ein Koordinatenmessgerät und/oder die Auswertung von Messergebnissen einer Vermessung eines vermessenden Werkstücks durch ein Koordinatenmessgerät durch Vorgabedaten ermöglicht, welche auf einem vorhandenen Prüfmerkmal basieren, das dem zu bestimmenden Prüfmerkmal ähnlich ist. Zu dem vorhandenen Prüfmerkmal sind zugeordnete Daten für eine Vermessung eines Werkstücks und/oder für eine Auswertung von Messergebnissen gespeichert. Wenn das vorhandene Prüfmerkmal als dem zu bestimmenden Prüfmerkmal ähnlich ermittelt wurde, stehen die zugeordneten, gespeicherten Daten des vorhandenen Prüfmerkmals insbesondere für die Festlegung eines Messablaufes und/oder die Auswertung von Koordinatenmessergebnissen des vermessenden Werkstücks zur Verfügung.

Die vorhandenen Prüfmerkmale mit den zugeordneten gespeicherten Daten können aus früheren, tatsächlich durchgeführten Messabläufen (allgemein aus der tatsächlichen Vermessung eines oder mehrerer Werkstücke) und/oder aus einer tatsächlichen früheren Auswertung von Messergebnissen bekannt seien. Alternativ oder zusätzlich können die Prüfmerkmale und zugeordneten gespeicherten Daten aus nicht tatsächlich durchgeführten Vermessungen bzw. nicht tatsächlich durchgeführten Auswertungen von Messergebnissen erhalten worden sein. Beispiele für tatsächliche Messungen sind CNC-Abläufe, für die dem vorhandenen Prüfmerkmal entsprechende computerlesbare Daten verwendet wurden. Diese computerlesbaren Daten und optional weitere Daten können zumindest teilweise als die dem vorhandenen Prüfmerkmal zugeordneten Daten gespeichert werden. Daten für nicht tatsächlich durchgeführte Messungen und Auswertungen können beispielsweise in Normen festgelegt sein, insbesondere unternehmensinternen Normen, und/oder Teil von Empfehlungen und/oder Vorgaben eines Unternehmens sein, das selbst Messungen und/oder Auswertungen durchführt.

Auch aus Empfehlungen und/oder Vorgaben von Herstellern von Koordinatenmessgeräten können vorhandene Prüfmerkmale entnommen oder erarbeitet werden, für die auch die zugeordneten Daten für eine Vermessung eines Werkstücks und/oder für eine Auswertung von Messergebnissen gespeichert werden können.

Durch die Ermittlung eines vorhandenen Prüfmerkmals, das dem zu bestimmenden Prüfmerkmal ähnlich ist, und durch den Zugriff auf die zugeordneten gespeicherten Daten wird der Aufwand für die Festlegung eines Messablaufes und/oder die Auswertung der Koordinatenmessergebnisse verringert. Ferner wird durch erneute Verwendung der dem vorhandenen Prüfmerkmal zugeordneten Daten für die Vermessung und/oder Bestimmung des zu bestimmenden Prüfmerkmals die Vergleichbarkeit mit früheren und/oder noch in der Zukunft liegenden Ergebnissen bei der Bestimmung des Prüfmerkmals oder ähnlicher Prüfmerkmale erhöht. Außerdem bieten vorhandene Daten, die vorhandenen Prüfmerkmalen zugeordnet sind und die für eine Vermessung eines Werkstücks und/oder für eine Auswertung von Messergebnissen als Vorgabedaten geeignet sind, die Möglichkeit, Fehler bei der Vermessung eines Werkstücks und/oder Auswertung von Messergebnissen zu vermeiden. Z.B. können die gespeicherten Daten in diesem Sinne bereits auf Fehler und Genauigkeit der erzielbaren Messergebnisse geprüft worden sein. In jedem Fall erhöht die mehrfache Verwendung der zugeordneten, gespeicherten Daten für die Bestimmung eines Prüfmerkmals die Wahrscheinlichkeit, dass ein Fehler bei Verwendung der Daten für eine Vermessung eines Werkstücks und/oder für eine Auswertung von Messergebnissen auffällt. Die zugeordneten Daten können in diesem Fall verändert und dadurch verbessert werden sowie für eine spätere weitere Verwendung wieder gespeichert werden.

Insbesondere kann das zu bestimmende Prüfmerkmal lediglich eines von mehreren zu bestimmenden Prüfmerkmalen sein, die Bestandteile desselben Prüfplanes zur planmäßigen Prüfung eines Werkstücks sind. Insbesondere kann für eine Mehrzahl der Prüfmerkmale desselben Prüfplans jeweils versucht werden, ein ähnliches vorhandenes Prüfmerkmal zu finden und zugeordnete gespeicherte Daten für die Vermessung des Werkstücks und/oder für die Auswertung von Messergebnissen bei der Vermessung des Werkstücks zu nutzen. Selbst wenn es für einzelne Prüfmerkmale des Prüfplans kein ähnliches vorhandenes Prüfmerkmal gibt, werden für den Prüfplan insgesamt die oben genannten Vorteile erzielt, sofern zumindest ein ähnliches vorhandenes Prüfmerkmal mit zugeordneten gespeicherten Daten ermittelt wird.

Das zu bestimmende Prüfmerkmal kann insbesondere unter Verwendung eines Computers festgelegt werden. Auch die Ermittlung des ähnlichen, vorhandenen Prüfmerkmals kann von dem Computer oder einem anderen, mit dem ersten Computer über eine Datenschnittstelle verbundenen zweiten Computer durchgeführt werden. Der Computer oder ein mit dem oder den Computern über eine Datenschnittstelle verbundener Computer kann ferner die dem ähnlichen, vorhandenen Prüfmerkmal zugeordneten Daten aus einem Datenspeicher (dabei kann es sich optional um einen verteilten Datenspeicher handeln) abrufen und als Vorgabedaten festlegen und optional auch ausgeben. Insbesondere können die so festgestellten Daten computerintern an eine Einrichtung ausgegeben werden, die unter Verwendung der abgerufenen, gespeicherten Daten den Ablauf der Vermessung des zu vermessenden Werkstücks und/oder dem Ablauf der Auswertung von Messergebnissen der Vermessung des vermessenden Werkstücks festlegt.

Eine Vorrichtung, die das Verfahren zum Vorgeben der Vorgabedaten ausführt, kann daher insbesondere ein Computer oder eine Anordnung von Computern sein. Die verschiedenen Computer einer Anordnung von Computern müssen sich nicht an demselben Ort befinden und können insbesondere über ein Datenübertragungsnetz oder zumindest eine Datenübertragungsverbindung miteinander verbunden sein/werden.

Zur Ausführung der Vermessung eines zu vermessenden Werkstücks wird insbesondere eine Messsoftware verwendet, die auf dem Computer oder der Anordnung von Computern ausgeführt wird. Die Software kann alternativ oder zusätzlich auf einem weiteren Computer oder mehreren weiteren Computern ausgeführt werden. Es ist daher möglich, dass das Verfahren zum Vorgeben der Vorgabedaten nicht auf dem Messcomputer mit der Messsoftware bzw. auf der Anordnung von Messcomputern mit der Messsoftware ausgeführt wird. In diesem Fall werden die Vorgabedaten aber vorzugsweise zu dem Computer oder der Anordnung von Computern mit der Messsoftware übertragen.

Auch das zumindest eine zu bestimmende Prüfmerkmal kann durch computerlesbare Daten festgelegt sein. Insbesondere können diese Festlegungsdaten auf demselben Computer oder derselben Anordnung von Computern vorhanden sein, der/die das Verfahren zum Vorgeben von Vorgabedaten ausführt/ausführen oder zumindest einen Teil des Verfahrens ausführt/ausführen. Bevorzugt wird es, dass bei Ausführung einer Vermessung eines Werkstücks durch ein computergesteuertes Koordinatenmessgerät auch das zumindest eine Prüfmerkmal, z.B. als Teil eines Prüfplans, auf dem Messcomputer oder der Anordnung von Messcomputern des Koordinatenmessgeräts als Satz von computerlesbaren Daten vorhanden ist.

Für die Verarbeitung der Messergebnisse aus einer Vermessung eines mit einem Koordinatenmessgerät vermessenen Werkstücks gilt vorzugsweise entsprechendes wie für die Durchführung der Vermessung eines Werkstücks durch ein computergesteuertes Koordinatenmessgerät: Die Auswertung kann durch einen Computer oder durch eine Anordnung von Computern, die über zumindest eine Datenschnittstelle miteinander in Verbindung stehen, durchgeführt werden. Dabei kann es sich um den Messcomputer oder die Anordnung von Messcomputern des Koordinatenmessgeräts handeln oder nicht. In jedem Fall stehen auf dem Computer oder der Anordnung von Computern, der/die die Auswertung der Messergebnisse durchführt/durchführen, die Vorgabedaten zur Verfügung, die durch Ermittlung des ähnlichen, vorhandenen Prüfmerkmals ermittelt und abgerufen wurden/werden.

Insbesondere kann der oben erwähnte Prüfplan, der mehrere Prüfmerkmale enthält, oder kann ein einzelnes Prüfmerkmal gemeinsam mit einem Computermodell (z.B. einen CAD-Modell) des zu vermessenden Werkstücks oder des vermessenen Werkstücks zu dem Computer oder der Anordnung von Computern übertragen werden, der/die die festgestellten Vorgabedaten verarbeitet, um die Vermessung des zu vermessenden Werkstücks vorzubereiten und/oder auszuführen und/oder die Auswertung der Messergebnisse aus der Vermessung des vermessenden Werkstücks durchzuführen. Durch Informationen aus dem Computermodell des Werkstücks können die Vorgabedaten ergänzt werden und/oder diese Informationen können mit den Vorgabedaten verknüpft werden, um die Vermessung des Werkstücks vorzubereiten und/oder durchzuführen und/oder um die Messergebnisse auszuwerten.

Insbesondere wird vorgeschlagen: Ein Verfahren zum Vorgeben von Vorgabedaten für eine Vermessung eines zu vermessenden Werkstücks durch ein Koordinatenmessgerät und/oder für eine Auswertung von Messergebnissen einer Vermessung eines vermessenen Werkstücks durch ein Koordinatenmessgerät, wobei
- ein zu bestimmendes Prüfmerkmal, das bei der Vermessung des Werkstücks vermessen und bei der Auswertung der Messergebnisse bestimmt werden soll, hinsichtlich folgender Prüfmerkmal-Eigenschaften:
   a) Dimension des Prüfmerkmals,
   b) Toleranzart und
   c) zulässiger Toleranzbereich
   festgelegt wird oder Informationen empfangen werden, durch die das zu bestimmende Prüfmerkmal hinsichtlich der Prüfmerkmal-Eigenschaften a) bis c) festgelegt ist,
- aus einer Menge von vorhandenen Prüfmerkmalen, für die jeweils zugeordnete Daten für eine Vermessung eines Werkstücks und/oder für eine Auswertung von Messergebnissen einer Vermessung eines Werkstücks gespeichert sind, durch Ermittlung, ob ein vorgegebenes Ähnlichkeitskriterium erfüllt ist, ein dem zu bestimmenden Prüfmerkmal ähnliches vorhandenes Prüfmerkmal ermittelt wird, wobei bei der Ermittlung, ob das vorgegebene Ähnlichkeitskriterium erfüllt ist, eine Ähnlichkeit der Prüfmerkmal-Eigenschaften a) bis c) des zu bestimmenden Prüfmerkmals einerseits und des vorhandenen Prüfmerkmals andererseits festgestellt wird,
- die dem ähnlichen vorhandenen Prüfmerkmal zugeordneten Daten abgerufen werden und als Vorgabedaten für den Ablauf der Vermessung des zu vermessenden Werkstücks und/oder für den Ablauf der Auswertung von Messergebnissen der Vermessung des vermessenen Werkstücks festgelegt werden.

Zum Umfang der Erfindung gehört ferner eine Vorrichtung, insbesondere eine Vorrichtung zur Ausführung des Verfahrens in einer der beschriebenen Verfahrens-Ausgestaltungen. Die Vorrichtung dient dazu, Vorgabedaten für eine Vermessung eines zu vermessenden Werkstücks durch ein Koordinatenmessgerät und/oder für eine Auswertung von Messergebnissen einer Vermessung eines vermessenen Werkstücks durch ein Koordinatenmessgerät vorzugeben und aufweist Folgendes auf:
- eine Empfangseinrichtung, die ausgestaltet ist Informationen zu empfangen, die ein zu bestimmendes Prüfmerkmal, das bei der Vermessung des Werkstücks vermessen und bei der Auswertung der Messergebnisse bestimmt werden soll, hinsichtlich folgender Prüfmerkmal-Eigenschaften:
   a) Dimension des Prüfmerkmals,
   b) Toleranzart und
   c) zulässiger Toleranzbereich
   festlegen,
- eine Feststellungseinrichtung, die ausgestaltet ist aus einer Menge von vorhandenen Prüfmerkmalen, für die jeweils zugeordnete Daten für eine Vermessung eines Werkstücks und/oder für eine Auswertung von Messergebnissen einer Vermessung eines Werkstücks gespeichert sind, durch Ermittlung, ob ein vorgegebenes Ähnlichkeitskriterium erfüllt ist, ein dem zu bestimmenden Prüfmerkmal ähnliches vorhandenes Prüfmerkmal zu ermitteln, wobei bei der Ermittlung, ob das vorgegebene Ähnlichkeitskriterium erfüllt ist, eine Ähnlichkeit der Prüfmerkmal-Eigenschaften a) bis c) des zu bestimmenden Prüfmerkmals einerseits und des vorhandenen Prüfmerkmals andererseits festgestellt wird,
- eine Datenabrufeinrichtung, die ausgestaltet ist die dem ähnlichen vorhandenen Prüfmerkmal zugeordneten Daten abzurufen und als Vorgabedaten für den Ablauf der Vermessung des zu vermessenden Werkstücks und/oder für den Ablauf der Auswertung von Messergebnissen der Vermessung des vermessenen Werkstücks festzustellen.

Für das zu bestimmende Prüfmerkmal wurden bereits Beispiele genannt. Weitere Beispiele sind die Position eines Geometrieelementes des Werkstücks, ein Koordinatenwert eines Geometrieelementes eines Werkstücks, der Durchmesser eines Werkstücks oder eines Werkstückbereichs, die Distanz zwischen zwei Geometrieelementen eines Werkstücks, die Ebenheit einer Fläche eines Werkstücks, insbesondere einer Oberfläche, die Symmetrie (z.B. Punktsymmetrie oder Achsensymmetrie) von zwei oder mehr als zwei Geometrieelementen eines Werkstücks, die Konzentrizität von zwei oder mehr als zwei Geometrieelementen eines Werkstücks, die Koaxialität von zwei oder mehr als zwei Geometrieelementen eines Werkstücks, die Neigung von zwei Geometrieelementen eines Werkstücks und die Rechtwinkligkeit von zwei Geometrieelementen eines Werkstücks. In der Praxis gibt es weitere Prüfmerkmale. Einige weitere Prüfmerkmale ergeben sich aus den im Folgenden angegebenen Beispielen zu der Toleranzart des Prüfmerkmals.

Ein zu bestimmendes Prüfmerkmal kann durch Prüfmerkmal-Eigenschaften festgelegt werden, um ein ähnliches, vorhandenes Prüfmerkmal ermitteln zu können, das gleiche oder ähnliche Eigenschaften hat. Gemäß der vorliegenden Erfindung wird/ist das zu bestimmende Prüfmerkmal zumindest hinsichtlich der drei Prüfmerkmal-Eigenschaften Dimension des Prüfmerkmals (z.B. 1 mm oder 10 um), Toleranzart und zulässiger Toleranzbereich festgelegt. Die Dimension des Prüfmerkmals kann zum Beispiel aus einem CAD Modell des Werkstücks ermittelt werden. Z.B. in der internationalen Norm ISO 1001, z.B. in der Fassung aus dem Jahr 2008, sind Toleranzarten genannt, die in verschiedene Gruppen von Toleranzarten eingeteilt werden können, nämlich Richtungstoleranzen (z.B. Parallelität, Rechtwinkligkeit und Neigung), Ortstoleranzen (Position, Konzentrizität, Koaxialität, Symmetrie, Profil einer Linie und Profil einer Fläche) und Lauftoleranzen (Rundlauf, Planlauf, Lauf in vorgegebener Richtung, Gesamtrundlauf und Gesamtplanlauf). Die ISO 1001 gibt insbesondere für diese Toleranzarten Symbole an. Dementsprechend kann jeder Toleranzart auch ein eindeutiger computerlesbarer Wert zugeordnet werden. Somit ist es nicht nur bei der Dimension des Prüfmerkmals (und auch beim zulässigen Toleranzbereich) auf einfache Weise möglich, ein Prüfmerkmal, nämlich ein zu bestimmendes Prüfmerkmal oder ein bereits vorhandenes Prüfmerkmal, durch einen computerlesbaren Wert eindeutig festzulegen. Der zulässige Toleranzbereich kann insbesondere durch die Grenzen des Toleranzbereichs (z.B. untere Grenze 3,75 mm, obere Grenze 3,76 mm) und/oder durch die Breite des zulässigen Toleranzbereichs (z.B. 10 µm, 30 µm, 2 Grad oder 2 Bogensekunden) festgelegt werden.

Optional kann das zu bestimmende Prüfmerkmal und können dementsprechend die vorhandenen Prüfmerkmale durch zumindest eine weitere Eigenschaft festgelegt werden und kann auch ermittelt werden, ob ein vorhandenes Prüfmerkmal hinsichtlich dieser zusätzlichen Eigenschaft dem zu bestimmenden Prüfmerkmal ähnlich ist. Ein Beispiel für eine weitere Eigenschaft ist das Material des Werkstücks (z.B. Metall, ein bestimmtes Metall oder Kunststoff). Weitere Beispiele für Eigenschaften, die zur Festlegung von Prüfmerkmalen dienen und deren Ähnlichkeit ermittelt werden kann, sind, die Geometrie des Werkstücks (z.B. Fasen mit einem bestimmten Fasenwinkel, Gewindebohrungen bestimmter Art, Sacklöcher mit bestimmter Tiefe und bestimmtem Bohrwinkel) in der Umgebung des oder der für die Bestimmung des Prüfmerkmals relevanten Geometrieelemente sowie dessen Bezüge, der Produktionsprozess oder Teil des Produktionsprozesses, in dem das Werkstück hergestellt wurde (z.B. Spritzguss oder Fräsen), ähnliche Zeichnungsnummern oder Ident-Nummern, die den Typ des zu vermessenden Werkstücks eindeutig bezeichnen, der Hersteller oder Lieferant des Werkstücks und die Auftragsnummer des Auftrages zur Vermessung und/oder Optimierung der Fertigung des Werkstücks.

Zur Bestimmung der Ähnlichkeit von Prüfmerkmalen anhand der Prüfmerkmal-Eigenschaften können z.B. an sich bekannte Verfahren angewendet werden, die bei der Suche nach ähnlichen Bauteilen in CAD-Konstruktionssoftware verwendet werden. In Bezug auf ein Prüfmerkmal schließt der Begriff Ähnlichkeit den Fall mit ein, dass die Prüfmerkmal-Eigenschaft gleich ist. Im Folgenden werden bevorzugte Ausgestaltungen der Ermittlung beschrieben, die das vorgegebene Ähnlichkeitskriterium zur Ermittlung eines oder mehrerer ähnlicher vorhandener Prüfmerkmale nutzen.

Insbesondere kann das Ähnlichkeitskriterium mehrere Teil-Ähnlichkeitskriterien aufweisen. Zur Erfüllung des Ähnlichkeitskriteriums kann vorgegeben sein, dass alle Teil-Ähnlichkeitskriterien erfüllt sein müssen. Bezüglich der o.g. Prüfmerkmal-Eigenschaften a) bis c) ist vorzugsweise vorgegeben, dass alle drei Prüfmerkmal-Eigenschaften des zu bestimmenden Prüfmerkmals einerseits und des vorhandenen Prüfmerkmals andererseits einander ähnlich sein müssen, damit ein vorhandenes Prüfmerkmal als ähnliches vorhandenes Prüfmerkmal ermittelt wird. Es kann jedoch zumindest ein weiteres Teil-Ähnlichkeitskriterium vorgegeben sein, das nicht zwingend erfüllt sein muss, damit das vorhandene Prüfmerkmal als ähnlich ermittelt wird. Dieses zumindest eine zusätzliche Teil-Ähnlichkeitskriterium kann insbesondere einer zusätzlichen Eigenschaft des Prüfmerkmals zugeordnet sein, die nicht eine der Prüfmerkmal-Eigenschaften a) bis c) ist.

Ferner kann dem Ähnlichkeitskriterium eine Anwendungsvorschrift zugeordnet sein, wie das Ähnlichkeitskriterium anzuwenden ist. Insbesondere kann ein Schwellwert für einen Unterschied bezüglich der Dimension des Prüfmerkmals und/oder des zulässigen Toleranzbereichs definiert sein und kann bei Überschreitung des Schwellwertes gemäß der Anwendungsvorschrift vorgegeben sein, dass die Eigenschaft dann als unähnlich zu betrachten ist. Alternativ kann die Anwendungsvorschrift vorgeben, dass bei Überschreitung des Schwellwertes zumindest ein weiterer Verfahrensschritt im Rahmen der Ähnlichkeitsprüfung ausgeführt wird, um zu ermitteln, ob das zu bestimmende Prüfmerkmal und das vorhandene Prüfmerkmal als einander ähnlich zu betrachten sind. Alternativ oder zusätzlich kann die Anwendungsvorschrift vorschreiben, im Fall einer Mehrzahl als ähnlich ermittelter vorhandener Prüfmerkmale das ähnlichste vorhandene Prüfmerkmal zu ermitteln. Z.B. können in diesem Fall Teilergebnisse bei der Ähnlichkeitsprüfung (z.B. Teilergebnisse bezüglich der einzelnen Prüfmerkmal-Eigenschaften) gewichtet werden und kann ein Gesamtergebnis der gewichteten Teilergebnisse erhalten werden, das mit Gesamtergebnissen bezüglich anderer vorhandener Prüfmerkmale verglichen werden kann. Dies ermöglicht eine objektive Bewertung.

Insbesondere können die Toleranzarten in Gruppen eingeteilt sein und kann bei der Ermittlung, ob das vorgegebene Ähnlichkeitskriterium erfüllt ist, eine Toleranzart des zu bestimmenden Prüfmerkmals einerseits und eine Toleranzart des vorhandenen Prüfmerkmals andererseits gemäß dem vorgegebenen Ähnlichkeitskriterium als einander ähnlich festgestellt werden, wenn sie in dieselbe Gruppe eingeteilt sind. Ein Beispiel für die Gruppeneinteilung wurde bereits oben beschrieben. Die Toleranzarten können jedoch auch in anderer Weise in Gruppen eingeteilt werden und/oder die Gruppen können mehr oder weniger Toleranzarten enthalten als oben beschrieben wurde.

Die Einteilung der Toleranzarten in Gruppen ermöglicht es, die Ähnlichkeit von Toleranzarten auf einfache Weise und zweckmäßig zu ermitteln.

Insbesondere kann gemäß dem vorgegebenen Ähnlichkeitskriterium die Dimension und/oder der zulässige Toleranzbereich des zu bestimmenden Prüfmerkmals einerseits und des vorhandenen Prüfmerkmals andererseits als einander ähnlich festgestellt werden, wenn ihre Differenz kleiner als ein durch das Ähnlichkeitskriterium vorgegebener Schwellwert ist, oder in einem alternativen Fall (d.h. bei Vorliegen eines anderen Ähnlichkeitskriteriums und/oder einer anderen Anwendungsvorschrift) kleiner oder gleich einem durch das Ähnlichkeitskriterium vorgegebenen ersten Schwellwert ist. Dies ermöglicht eine objektive Prüfung auf Ähnlichkeit. Das Überschreiten des Schwellwertes kann wie oben bereits angedeutet dazu führen, dass die Prüfmerkmal-Eigenschaft als unähnlich betrachtet wird. Alternativ kann aber bei Überschreiten des Schwellwertes wie oben erwähnt zumindest ein weiterer Schritt bei der Ähnlichkeitsprüfung ausgeführt werden. Auch bei Unterschreiten des Schwellwertes kann optional ein zusätzlicher Verfahrensschritt bei der Prüfung der Ähnlichkeit ausgeführt werden, z.B. die Feststellung des Grades der Ähnlichkeit wie im Folgenden beschrieben und die Identifizierung des ähnlichsten vorhandenen Prüfmerkmals.

Alternativ oder zusätzlich kann anhand des vorgegebenen Ähnlichkeitskriterium ein Grad einer Ähnlichkeit der Dimension und/oder des zulässigen Toleranzbereichs des zu bestimmenden Prüfmerkmals einerseits und mehrerer vorhandener Prüfmerkmale andererseits festgestellt werden, wobei das vorgegebene Ähnlichkeitskriterium für ein ähnliches vorhandenes Prüfmerkmal erfüllt ist, wenn dessen Grad der Ähnlichkeit größer als ein zweiter vorgegebener Schwellwert ist und/oder dessen Grad der Ähnlichkeit größer als der Grad der Ähnlichkeit aller anderen vorhandenen Prüfmerkmale ist, für die der Grad der Ähnlichkeit festgestellt wurde. Dies ermöglicht es, das ähnlichste vorhandene Prüfmerkmal zu ermitteln.

Es ist von Vorteil, die nach Ermittlung eines oder mehrerer ähnlicher vorhandener Prüfmerkmale festgelegten Vorgabedaten als Teil eines Prüfplans abzuspeichern, wobei anhand des Prüfplans die Vermessung des zu vermessenden Werkstücks und/oder die Auswertung der Messergebnisse aus der Vermessung eines vermessenen Werkstücks durchgeführt wird.

Insbesondere kann mittels der Vorgabedaten ein Ablauf der Vermessung des zu vermessenden Werkstücks und/oder ein Ablauf der Auswertung von Messergebnissen der Vermessung des vermessenen Werkstücks festgelegt werden, d.h. diese Festlegung kann ein Schritt des Verfahrens sein. Optional kann das Verfahren auch die Ausführung des so festgelegten Ablaufs der Vermessung und/oder des festgelegten Ablaufs der Auswertung der Messergebnisse enthalten. Dadurch werden die oben genannten Vorteile auch in der Praxis erzielt. Die Vorrichtung kann entsprechend ausgestaltet sein. Dies gilt entsprechend auch für die im Folgenden beschriebenen Ausgestaltungen des Verfahrens.

Insbesondere wenn die Vorgabedaten für die Festlegung eines Ablaufs der Vermessung des zu vermessenden Werkstücks verwendet werden sollen bzw. verwendet werden, können die Vorgabedaten zumindest einen Messparameter aufweisen. Zu den Messparametern gehören insbesondere eine Art und/oder Größe eines Messsensors, mit dem das zu vermessende Werkstück (berührend und/oder berührungslos, zum Beispiel optisch) abzutasten ist, eine Scanning-Geschwindigkeit, mit der das zu vermessende Werkstück scannend abgetastet wird, eine Anzahl und/oder Verteilung von Oberflächenpunkten des zu vermessenden Werkstücks, die abgetastet werden sollen, und/oder eine relative Position eines abzutastenden Oberflächenpunktes und/oder Oberflächenbereichs des zu vermessenden Werkstücks.

Insbesondere wenn die Vorgabedaten zur Festlegung eines Ablaufs der Auswertung von Messergebnissen der Vermessung des vermessenden Werkstücks verwendet werden sollen, können die Vorgabedaten zumindest eine Vorgabe zur Auswertung der Messergebnisse aufweisen. Beispiele für solche Vorgaben sind ein Auswerteverfahren, ein Auswertekriterium, zumindest eine Vorgabe zur Filterung der Messergebnisse und/oder zumindest eine Vorgabe zur Behandlung von nicht plausiblen Messwerten.

Ausführungsbeispiele und Hintergründe der Erfindung werden nun unter Bezugnahme auf die beigefügte Zeichnung beschrieben. Die einzelnen Figuren der Zeichnung zeigen:
- Fig.1: ein Koordinatenmessgerät, von dessen Messrechner (d.h. Messcomputer) das erfindungsgemäße Verfahren ausgeführt wird,
- Fig.2: das Werkstück aus Fig.1, an dem ein Prüfmerkmal auszuwerten ist, z. B. das Prüfmerkmal "Durchmesser einer Bohrung",
- Fig.3: eine schematische Darstellung von Programmfunktionen des auf dem Messrechner aus Fig.1 vorhandenen Messprogramms,
- Fig.4: eine schematische Darstellung eines Prüfplans,
- Fig.5: eine schematische Darstellung eines Ausführungsbeispiels des erfindungsgemäßen Verfahrens,
- Fig.6: eine schematische Darstellung eines Vergleichs eines zu bestimmenden Prüfmerkmals mit vorhandenen Prüfmerkmalen und
- Fig.7: das Koordinatenmessgerät aus Fig.1, wobei jedoch das erfindungsgemäße Verfahren nicht im Messrechner des Koordinatenmessgerätes ausgeführt wird, sondern in einem vom Koordinatenmessgerät entfernten Rechner.

Bei der Vermessung eines Werkstückes wird üblicherweise wie folgt vorgegangen. Zunächst wird ein Prüfplan erzeugt, in dem die zu prüfenden Prüfmerkmale eines zu vermessenden Werkstückes enthalten sind. Solche Prüfmerkmale können beispielsweise der Abstand der Mittelpunkte zweier Bohrungen, die Abweichungen von Messpunkten auf einer Freiformfläche gegenüber einer Sollform, die Lage des Mittelpunktes einer Bohrung und der Durchmesser einer Bohrung gemäß Hüllkreis sein. Weitere Beispiele wurden bereits genannt. Basierend auf dem Prüfplan wird sodann ein Messablauf definiert, um hierdurch die zur Bestimmung der Prüfmerkmale notwendigen Messpunkte auf der Oberfläche des zu vermessenden Werkstückes festzulegen. In einem nächsten Schritt wird der so festgelegte Messablauf durch das Koordinatenmessgerät abgearbeitet, wodurch dann die benötigten Messpunkte auf der Oberfläche des Werkstückes gemäß dem durch den Prüfplan festgelegten Messablauf aufgezeichnet werden. Danach werden die einzelnen Prüfmerkmale des Prüfplans basierend auf den aufgenommenen Messpunkten bestimmt und hierdurch die zur Erstellung eines Messprotokolls erforderlichen Daten gewonnen. Aus diesen Daten wird dann ein Messprotokoll insbesondere in Form eines elektronischen Dokumentes generiert, in dem die Messergebnisse festgehalten sind. Bezogen auf dieses Ausführungsbeispiel einer üblichen Vorgehensweise erleichtert und verbessert die vorliegende Erfindung den Verfahrensschritt der Definition des Messablaufes und/oder der Bestimmung der Prüfmerkmale basierend auf den aufgenommenen Messpunkten.

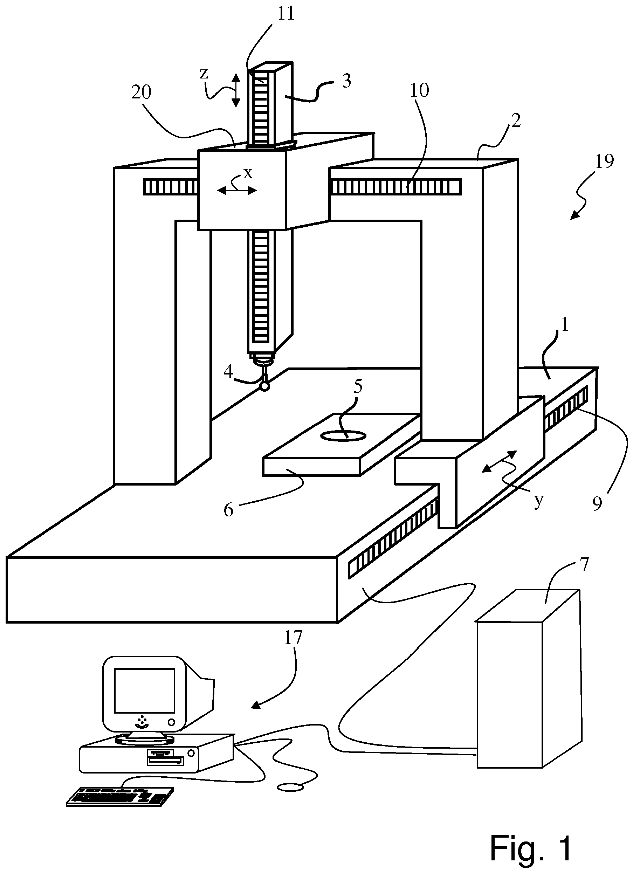

Fig.1 zeigt ein Koordinatenmessgerät 19 mit einem Messrechner 17, auf dem das erfindungsgemäße Verfahren zum Vorgeben von Vorgabedaten durchgeführt werden kann. Lediglich in diesem Ausführungsbeispiel ist das Koordinatenmessgerät 19 ein sogenanntes Gerät in Portalbauweise. Entlang von zwei parallelen Führungen im Bereich eines Messtisches 1 ist ein erster Messschlitten 2 in Form eines Portals beweglich geführt ist. Zur Messung der Position des Portals ist ein Maßstab 9 mit einem entsprechenden Ablesesensor vorgesehen, der hier schematisch dargestellt ist. Außerdem ist ein Antrieb (nicht dargestellt) vorgesehen, der den ersten Messschlitten 2 in der mit dem Pfeil y bezeichneten Richtung entlang der Führung verfahren kann. Entlang der den Messtisch 1 horizontal überspannenden Traverse des portalförmigen ersten Messschlittens 2, ist ein zweiter Messschlitten 20 beweglich geführt, wobei dieser zur Positionsmessung in der mit dem Pfeil x bezeichneten Richtung einen Maßstab 10 mit zugehörigem Ablesesensor aufweist, wobei der zweite Messschlitten 20 von einem zweiten Antrieb (nicht dargestellt) in der mit dem Pfeil x bezeichneten Richtung bewegt werden kann. An dem zweiten Messschlitten 20 wiederum ist ein dritter Messschlitten 3 (hier eine Pinole) beweglich geführt, wobei die Position des Messschlittens 3 in der mit dem Pfeil z bezeichneten Richtung über einen Maßstab 11 mit zugehörigem Ablesesensor ermittelt werden kann und ebenfalls ein Antrieb (nicht dargestellt) vorgesehen ist, um den dritten Messschlitten 3 in der dritten Koordinatenrichtung z zu bewegen. Am unteren Ende des dritten Messschlittens 3 ist ein Messsensor befestigt, der im vorliegenden Fall in Form eines taktilen Sensors 4 ausgebildet ist.

Auf dem Messtisch 1 ist ein Werkstück 6 angeordnet, das durch Bewegung der drei Messschlitten 2, 20, 3 vom taktilen Sensor 4 abgetastet werden kann, wobei aus den Signalen des Sensors 4 und aus den Maßstabspositionen der Maßstäbe 9, 10, 11 Messwerte auf der Oberfläche des zu vermessenden Werkstückes 6 ermittelt werden. Ein Regler für die Regelung der Antriebe der Messschlitten 2, 20, 3 befindet sich in einer Steuerung 7. Außerdem werden von der Steuerung 7 auch die Maßstabswerte der Maßstäbe 9, 10, 11 ausgelesen, sowie die Signale des Sensors 4. Mit der Steuerung 7 verbunden ist ein Messrechner 17, der dazu dient, einen Prüfplan zu erstellen, Vorgabedaten festzulegen, basierend auf dem Prüfplan und den Vorgabedaten einen Messablauf zu erstellen und die zur Ausführung des Messablaufes notwendigen Informationen an die Steuerung 7 zu übergeben. Die Steuerung 7 steuert anschließend den Messablauf. Derartige Informationen, die vom Messrechner 17 an die Steuerung übergeben werden, können verschiedener Art sein. Insbesondere können sie Informationen sein, die die Antastung des Werksruckes an den gewünschten Stellen betreffen. Die Steuerung 7 wiederum liefert dann die ermittelten Messwerte des Werkstückes 6 an den Messrechner 17 zurück, wo die rückgelieferten Werte dann vom Messrechner 17 ausgewertet werden. Auf Basis der ausgewerteten Werte kann dann ein Messprotokoll erstellt werden.

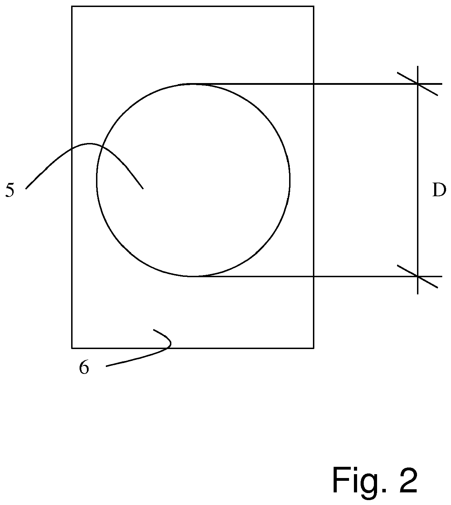

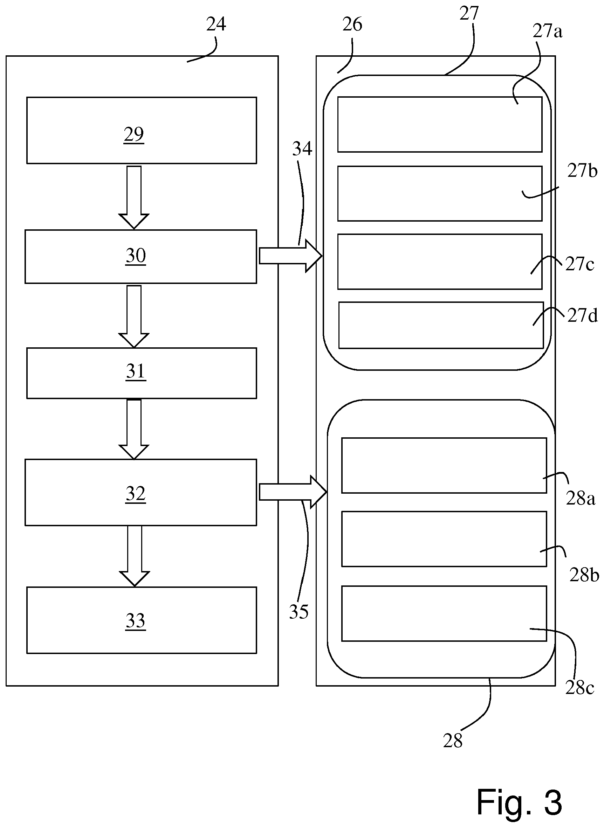

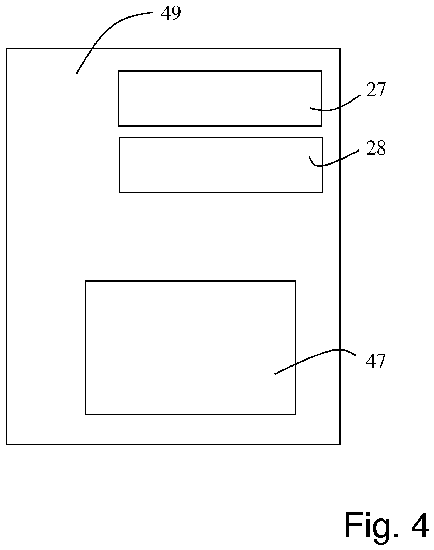

Eine einfache Vermessung des in Fig.1 gezeigten Werkstückes 6 kann darin bestehen, lediglich den Durchmesser D der Bohrung 5 in dem Werkstück 6 zu bestimmen, wie dies die Fig.2 darstellt. Das einzige auszuwertende Prüfmerkmal ist in diesem Beispiel der Durchmesser der Bohrung 5. Die entsprechende Vorgehensweise wird nachfolgend anhand der Figuren 3 und 4 erläutert.

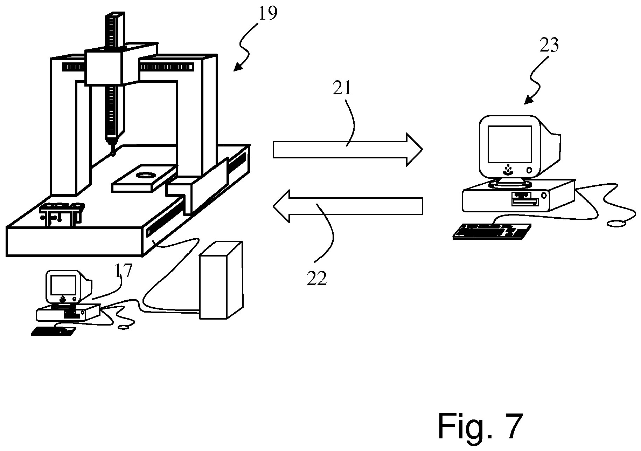

Fig.3 zeigt in vereinfachter Weise Schritte bei der Ausführung von Programmen auf dem Messrechner 17, mit denen die Vermessung des Werkstückes 6 aus Fig.1 vorbereitet und ausgeführt werden kann sowie die Messergebnisse ausgewertet werden können. Mit dem Bezugszeichen 24 ist ein im Messrechner 17 laufendes Messprogramm bezeichnet, wobei die Bezugszeichen 29 bis 33 die einzelnen Schritte des Messprogramms 24 von der Erstellung des Prüfplans bis zur Erstellung des Messprotokolls bezeichnen. Die Funktionen des Messprogramms 24 sind stark vereinfacht dargestellt. Messprogramme können in der Praxis anders ausgeführt werden. Während es sich im Beispiel um ein einziges Programm handelt, das vollständig auf dem Messrechner 17 abläuft, können einzelne oder alle Schritte durch separate Programme ausgeführt werden. Sofern zumindest einzelne der Schritte 29 bis 33 in separaten Programmen realisiert sind, können diese sogar auf unterschiedlichen Rechnern ausgeführt werden. Insbesondere kann das erfindungsgemäße Verfahren der Festlegung von Vorgabedaten nach Fig.7 auf einem vom Messrechner 17 getrennten Rechner 23 ausgeführt werden oder es kann vom Messrechner 17 auf den getrennten Rechner (dies muss kein Personal Computer sein, sondern kann z.B. ein zentraler Datenbankrechner sein) zugegriffen werden, während das Verfahren zur Festlegung von Vorgabedaten ausgeführt wird. Z.B. können in der zentralen Datenbank die vorhandenen Prüfmerkmale und die zugeordneten Daten gespeichert sein. Die Interaktion und Datenübertragung zwischen auf unterschiedlichen Rechnern laufenden Programmen kann gemäß üblichen Techniken, z. B. unter Nutzung des http-Protokolls, über Web-Dienste und/oder unter Nutzung von RPC (Remote Procedure Calls) oder CORBA (Common Object Request Broker Architecture) erfolgen.

In Schritt 29 wird ein Prüfplan erstellt. Hierbei werden die einzelnen Prüfmerkmale festgelegt, die an dem zu vermessenden Werkstück bestimmt werden sollen. Als Beispiel für die Erstellung eines Prüfplans wird auf die in der Beschreibungseinleitung genannte DE 198 21 371 A1 verwiesen. Das Messprogramm ist vorzugsweise so ausgestaltet, dass der Bediener mit geringem Aufwand den Prüfplan erstellen kann. Im hier beschriebenen Beispiel weist der Prüfplan lediglich ein einziges Prüfmerkmal auf (siehe oben).

In Schritt 30 wird der Messablauf festgelegt. Hierzu greift das Programm 24 auf Vorgabedaten 27 zu, wie durch einen Pfeil 34 angedeutet ist. Auf diese Vorgabedaten 27 wird noch näher eingegangen. Die Festlegung des Messeablaufs kann automatisch erfolgen, da der Prüfplan zusammen mit den Vorgabedaten alle Informationen enthält, die für die Festlegung des Messablaufes notwendig sind.

In Schritt 31 wird der Messablauf ausgeführt und werden die Messergebnisse aufgezeichnet. Wie bereits erwähnt, übergibt der Messrechner 17 dazu alle erforderlichen Steuerdaten an die Steuerung 7 und erhält von der Steuerung 7 die während des Messablaufes aufgezeichneten Messwerte zurück. Insbesondere werden Koordinaten von denjenigen Messpunkten auf der Oberfläche des Werkstückes 6 mit dem Koordinatenmessgerät 19 gemessen, die durch den Prüfplan festgelegt sind.

In dem nachfolgenden Schritt 32 werden die Messergebnisse ausgewertet. Hierzu greift das Programm 24 auf zweite Vorgabedaten 28 zu, wie durch einen Pfeil 35 angedeutet ist. Auf diese zweiten Vorgabedaten 28 wird noch näher eingegangen. Unter Verwendung der zweiten Vorgabedaten 28, die die Auswertung betreffen, werden die Messergebnisse ausgewertet und das Prüfmerkmal bestimmt.

In dem letzten Schritt 33 wird das Messprotokoll erstellt.

In Fig.3 bezeichnet das Bezugszeichen 26 die Gesamtheit der Vorgabedaten 27, 28, die durch das erfindungsgemäße Verfahren unter Verwendung von gespeicherten Daten, welche einem oder mehreren vorhandenen Prüfmerkmalen zugeordnet sind, festgelegt werden. Die Vorgabedaten 26 können beispielsweise in Form einer Daten-Datei gespeichert sein, z.B. in Form einer XML-Datei, in Form einer INI-Datei oder in einem anderen Datenformat. Alternativ können die Vorgabedaten 27 und/oder 28 zumindest teilweise oder vollständig in einer Datenbank gespeichert sein. Die zentrale Speicherung hat den besonderen Vorteil, dass ein Anbieter der Daten (z. B. der Hersteller von Koordinatenmessgeräten) die Datenbank zentral pflegen kann und der Bediener des Koordinatenmessgerätes 19 nicht nur auf aktuelle Vorgabedaten zugreifen kann sondern optional auf zusätzliche Daten, die z.B. auf dem Messrechner des Koordinatenmessgerätes verwendet werden können. Die Daten können vor unberechtigtem Zugriff geschützt sein/werden.

Im Beispiel befinden sich die Vorgabedaten 26 nach ihrer Festlegung auf dem Messrechner 17 aus Fig.1. Stattdessen können die Vorgabedaten 26 lediglich auf einem entfernten Rechner gespeichert werden, auf die dann der Messrechner über eine Datenverbindung Zugriff hat. Alternativ oder zusätzlich können die Vorgabedaten 27 und/oder 28 zentral über einen Datenbankserver zur Verfügung gestellt werden.

Die ersten Vorgabedaten 27 enthalten Messparameter zur Vermessung des Werkstücks, d.h. zur Festlegung eines Messablaufes und für dessen Ausführung. In dem hier beschriebenen Ausführungsbeispiel weisen die ersten Vorgabedaten 27 einen ersten Messparameter 27a auf, der die Art und Größe eines Messsensors festlegt, mit dem das zu vermessende Werkstück (hier berührend) abzutasten ist. Dies ist hier ein taktiler Taster, dessen Art (hier ein Taststift mit einem einzigen Schaft und einer einzigen Tastkugel) und Größe (Taststiftlänge und Tastkugeldurchmesser) durch den ersten Messparameter festgelegt sind. Ein zweiter Messparameter 27b der Vorgabedaten 27 definiert die Anzahl und/oder Verteilung von Oberflächenpunkten des zu vermessenden Werkstücks, die abgetastet werden sollen, hier indem eine Scanning-Abtastlinie festgelegt wird, die am Innenumfang der Bohrlochoberfläche in sich geschlossen verläuft, d.h. annähernd eine Kreislinie ist. Optional kann außerdem die Scanning-Geschwindigkeit durch den zweiten Messparameter 27b oder durch einen weiteren Messparameter definiert sein. Ein dritter Messparameter 27c der Vorgabedaten 27 definiert die relative Position eines abzutastenden Oberflächenpunktes und/oder Oberflächenbereichs des zu vermessenden Werkstücks, hier die Bohrlochtiefe der Scanning-Abtastlinie. Insbesondere können mehr als eine Scanning-Abtastlinie durch den zweiten und dritten Messparameter definiert sein.

Z. B. können die Vorgabedaten 27 außerdem zumindest eine Messstrategie zur Messung des Prüfmerkmals aufweisen. Solche Messstrategievorgaben können mehrere Vorgaben aufweisen, die die Messstrategie ganz oder teilweise festlegen. Eine der Vorgaben einer solchen Messstrategie kann eine beschreibende Information sein, die im Zusammenhang mit der Messstrategie für das Prüfmerkmal steht, und beispielsweise die Messstrategie beschreibt. Eine weitere mögliche Vorgabe betrifft die Geometrieelemente, die zur Messung des betreffenden Prüfmerkmals zu messen sind. Solche Vorgaben für Geometrieelemente können als Verweis auf vorgegebene Antaststrategien zur Erfassung von Geometrieelementen eingefügt werden. Antaststrategie-Vorgaben können für eine Vielzahl von Geometrieelementen existieren und vorgegeben sein, wie z.B. den Kreis, den Zylinder, die Ebene, die Freiformflache, den Punkt, den Kegel oder den Torus.

Im Beispiel der Fig.3 sind mit dem Bezugszeichen 27d ein oder mehrere Verweise (z.B. ein Daten-Links) auf Antaststrategie-Vorgaben zu den zu vermessenden Geometrieelementen bezeichnet. Z.B. ist als Vorgabe festgelegt, dass ein Geometrieelement Kreis oder Zylinder benötigt wird. Außerdem könnte als Vorgabe vorgesehen sein, dass ein Geometrieelement Ebene benötigt wird, das durch einen Verweis 27d festgelegt ist. Diese Ebene ist z.B. die Ebene der Werkstückoberfläche in dem Bereich, in dem sich die Bohrung im Werkstück befindet. Die Antaststrategien, die sich auf Geometrieelemente beziehen, können dann wiederum Vorgaben dazu enthalten, wie die jeweiligen Geometrieelemente zu vermessen sind. Im Beispiel ist z.B. festgelegt, unter welchen Bedingungen ein Kreis (z.B. mittels der oben genannten Scanning-Linie) zu ermitteln ist (nämlich z.B. dann, wenn die Bohrlochtiefe laut CAD Modell des Werkstücks kleiner als der Bohrlochdurchmesser ist) und unter welchen Bedingungen alternativ zum Kreis eine Zylinderfläche zu ermitteln ist. Dies ist z.B. nur dann der Fall, wenn die Bohrlochtiefe dem ein- bis dreifachen des Bohrlochdurchmessers entspricht. Dann ist eine Zylinderfläche aus drei gemessenen Kreisen zu ermitteln. Wenn die Bohrlochtiefe hingegen mehr als dem dreifachen des Bohrlochdurchmessers entspricht, ist eine Zylinderfläche aus fünf gemessenen Kreisen zu ermitteln. Die Antaststrategie legt z.B. außerdem abhängig vom Bohrlochdurchmesser fest, mit welcher Messgeschwindigkeit der Messsensor zu verfahren ist, wie viele Messwerte pro gemessenem Kreis zu verwenden sind und wie groß die Tastkugel des taktilen Tasters zu wählen ist.

Die zweiten Vorgabedaten 28 enthalten Vorgaben zur Auswertung der Messergebnisse. Eine erste Vorgabe 28a legt fest, unter welchen Bedingungen Ausreißer aus den Messwerten eliminiert werden, z.B. wenn ein Messwert um mehr als eine vorgegebene maximal erwartete Distanz von dem idealen Kreis entlang der Bohrlochoberfläche entfernt ist. Eine zweite Vorgabe 28b legt fest, ob und welche Filtereinstellungen zur Filterung der Messergebnisse verwendet werden, z.B. zum Ausgleich einer erwarteten Oberflächenrauheit der Bohrlochoberfläche. Eine dritte Vorgabe 28c legt fest, nach welchem Verfahren Hüllkurven oder Hüllflächen an die Messergebnisse angepasst werden (z.B. Pferchkurve, Ausgleichskurve oder Gaußkurve). Z.B. kann zumindest eine der Auswertungs-Vorgaben abhängig vom jeweiligen Bohrungsdurchmesser festgelegt sein.

Fig.4 zeigt eine vereinfachte Darstellung eines Prüfplans 49, der z.B. das Prüfmerkmal 47 "Ermittlung des Durchmessers D der Bohrung 5 aus dem in Fig.2 gezeigten Werkstück 6" aufweist. Mit den Bezugszeichen 27 und 28 sind die Vorgabedaten aus Fig.3 bezeichnet, die z. B. in Schritt 30 in Fig.3 in den Prüfplan aufgenommen werden.

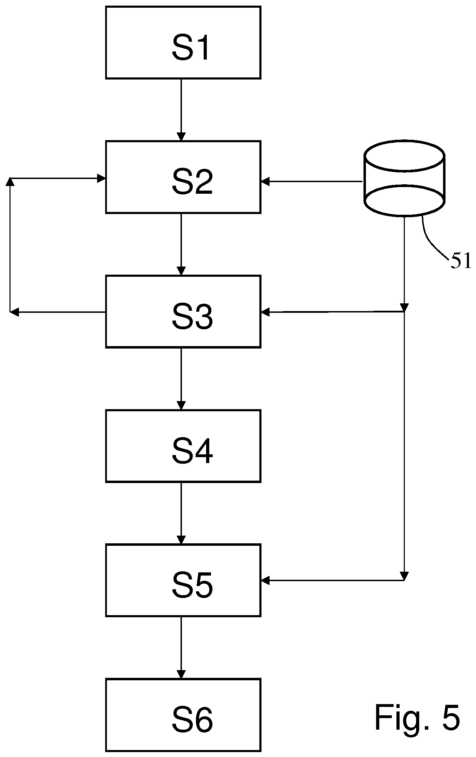

Im Folgenden wird ein Ausführungsbeispiel des erfindungsgemäßen Verfahrens zum Festlegen von Vorgabedaten anhand von Fig. 5 beschrieben.

In einem ersten Schritt S1 wird das zumindest eine Prüfmerkmal festgelegt. Bei Schritt S1 handelt es sich um einen optionalen Schritt. Alternativ zu einer Festlegung des zu bestimmenden Prüfmerkmals als Teil des Verfahrens können Informationen darüber empfangen werden bzw. ausgelesen (z.B. aus dem Datenspeicher des Messrechners) werden, wie das Prüfmerkmal definiert ist.

In dem nachfolgenden Schritt S2 werden Informationen über zumindest ein vorhandenes Prüfmerkmal eingelesen, insbesondere aus einem Datenspeicher, z. B. aus einer zentralen Datenbank. Ein Datenspeicher 51 ist rechts neben Schritt S2 in Fig. 5 durch einen niedrigen Zylinder schematisch dargestellt. Alternativ zu dem einen dargestellten Datenspeicher können mehrere Datenspeicher vorhanden sein.

In einem nachfolgenden Schritt S3 wird ermittelt, ob Prüfmerkmal-Eigenschaften, darunter die Dimension des Prüfmerkmals, die Toleranzart und der zulässige Toleranzbereich, des vorhandenen Prüfmerkmals einerseits und des zu bestimmenden Prüfmerkmals andererseits einander ähnlich sind und ein vorgegebenes Ähnlichkeitskriterium erfüllt ist. Informationen über das Ähnlichkeitskriterium können insbesondere aus einem Datenspeicher, z.B. demselben Datenspeicher wie bei Schritt S2, eingelesen werden.

Optional, wie durch von Schritt S3 zu Schritt S2 weisende Pfeile links in Fig. 5 angedeutet ist, kann das Einlesen von Informationen über ein vorhandenes Prüfmerkmal wiederholt werden, wobei auch für das zumindest eine weitere vorhandene Prüfmerkmal die Ähnlichkeitsprüfung gemäß Schritt S3 ausgeführt wird.

In einem auf Schritt S3 folgenden Schritt S4 wird entschieden, dass ein in Schritt S3 als ähnlich ermitteltes vorhandenes Prüfmerkmal gemäß dem vorgegebenen Ähnlichkeitskriterium ein ähnliches vorhandenes Prüfmerkmal ist. Optional kann in Schritt S4 die Entscheidung getroffen werden, welches von mehreren ähnlichen vorhandenen Prüfmerkmalen das ähnlichste vorhandene Prüfmerkmal ist oder das am besten geeignete ähnliche vorhandene Prüfmerkmal ist.

In einem auf Schritt S4 folgenden Schritt S5 werden für das in Schritt S4 festgelegte ähnliche vorhandene Prüfmerkmal die zugeordneten Daten für eine Vermessung eines Werkstücks und/oder für eine Auswertung von Messergebnissen einer Vermessung eines Werkstücks eingelesen, z.B. aus einem Datenspeicher, bei dem es sich um den Datenspeicher 51 handeln kann. Dies ist durch Pfeile angedeutet. Diese Daten werden als Vorgabedaten in Schritt S5 ausgegeben und in dem nachfolgenden optionalen Schritt S6 z.B. in einen vorhandenen Prüfplan aufgenommen.

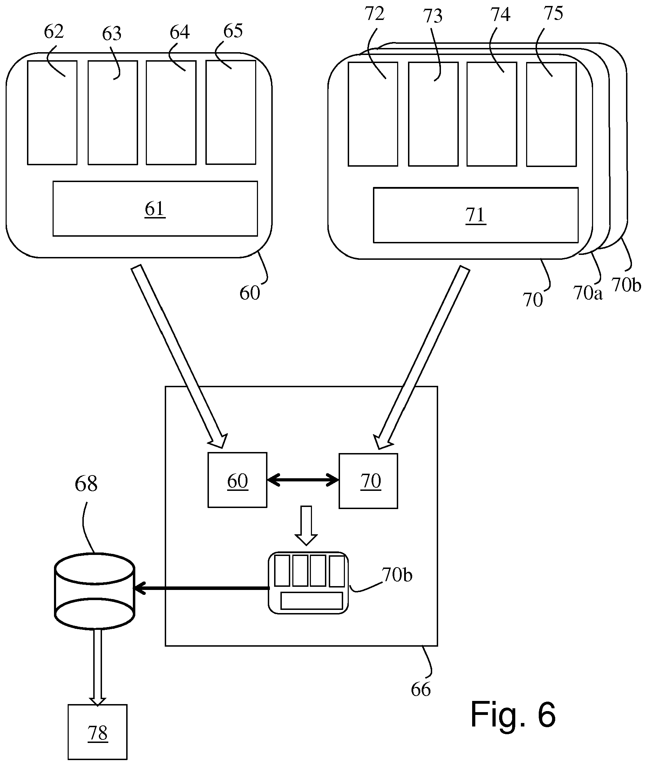

Die in Fig. 6 schematisch dargestellte Vergleichseinrichtung 66 kann insbesondere so betrieben werden, wie in Schritt S3 aus Fig. 5 beschrieben ist. Das zu bestimmende Prüfmerkmal ist in Fig. 6 schematisch links oben dargestellt und mit dem Bezugszeichen 60 bezeichnet. Rechts oben in Fig. 6 sind schematisch mehrere vorhandene Prüfmerkmale 70, 70a, 70b dargestellt. Die Definition des zu bestimmenden Prüfmerkmals ist mit dem Bezugszeichen 61 bezeichnet und die Definition des vorhandenen Prüfmerkmals 70 ist mit dem Bezugszeichen 71 bezeichnet. Jedes der Prüfmerkmale 60, 70 wird durch zumindest drei Prüfmerkmal-Eigenschaften, nämlich die Dimension des Prüfmerkmals 62, 72, die Toleranzart 63, 73 und den zulässigen Toleranzbereich 64, 74 beschrieben. Optional kann jeweils zumindest eine weitere Prüfmerkmal-Eigenschaft 65, 75 vorhanden sein, die das jeweilige Prüfmerkmal 60, 70 definiert.

Die Vergleichseinrichtung 66 vergleicht das zu bestimmende Prüfmerkmal 60 z.B. einzeln mit den vorhandenen Prüfmerkmalen 70, 70a, 70b. Es wird, soweit vorhanden, von der Vergleichseinrichtung 66 ein ähnliches vorhandenes Prüfmerkmal identifiziert. Im Ausführungsbeispiel ist dies das vorhandene Prüfmerkmal 70b.

Die Vergleichseinrichtung 66 gibt ein dem identifizierten ähnlichen vorhandenen Prüfmerkmal entsprechendes Signal aus. In Fig. 6 ist dies durch einen nach links weisenden Pfeil schematisch dargestellt, der auf einen Datenspeicher 68 zeigt. Entsprechend dem Signal wird aus dem Datenspeicher 68 ein Satz Vorgabedaten 78 ausgegeben, die Vorgabedaten für die Vermessung des Werkstücks und/oder für die Auswertung von Messergebnissen einer Vermessung des Werkstücks sind.

Fig.7 zeigt eine zweite Anordnung, die eine Variante der in Fig.1 dargestellten Anordnung ist. Es ist ein zusätzlicher von dem Messrechner 17 des Koordinatenmessgeräts 19 entfernter Rechner 23 vorhanden. Gegenüber Fig.1 besteht außerdem der Unterschied, dass der entfernte Rechner 23 das Verfahren zur Festlegung der Vorgabedaten selbständig ausführt. Um die Vorgabedaten dem Messrechner des Koordinatenmessgeräts 19 zur Verfügung zu stellen, werden die Vorgabedaten über eine Datenverbindung 22 vom entfernten Rechner 23 zum Koordinatenmessgerät 19 übertragen. Alternativ können die Vorgabedaten, die zur Vermessung des Werkstücks und/oder zur Auswertung der Messergebnisse verwendet werden, auf einem Datenträger von dem Rechner 23 zu dem Messrechner 17 transportiert werden.

Alternativ können der Messrechner 17 und der entfernte Rechner 23 das Verfahren zur Festlegung der Vorgabedaten gemeinsam ausführen. In diesem Fall werden Daten auch über die Datenverbindung 21 vom Messrechner 17 zum entfernten Rechner 23 übertragen.

Hinsichtlich des Begriffs Koordinatenmessgerät soll nochmals erwähnt werden, dass dieser nicht auf Koordinatenmessgeräte in Portalbauweise beschränkt ist, sondern insbesondere auch Geräte in Gantrybauweise, Horizontalarmgeräte und Gelenkarmgeräte mit einschließt. Auch können von dem Begriff optional Maschinen mit erfasst sein, die zwar nicht primär als Koordinatenmessgeräte konzipiert sind, die aber so eingerichtet sind, wie ein Koordinatenmessgerät zu arbeiten. Bekannt sind beispielsweise Roboterarme mit Drehgelenken, an denen anstelle eines Werkzeuges ein Sensor zur Erfassung der Werkstückoberfläche (beispielsweise ein Streifenprojektionssensor) befestigt ist, oder Werkzeugmaschinen, an denen anstelle eines Bearbeitungswerkzeuges ein Sensor zur Erfassung der Werkstückoberfläche (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist. Ferner fällt unter den Begriff Koordinatenmessgerät zum Beispiel auch ein Gerät, das z. B. durch tomografische Verfahren invasive Strahlung auf das Werkstück einstrahlt und zum Beispiel Durchstrahlungsbilder und/oder Reflexionsbilder (englisch: radiographs) aufnimmt. Insbesondere kann aus mehreren solcher Bilder durch Rekonstruktionsverfahren ein dreidimensionales Bild des Werkstücks erzeugt werden, aus dem wiederum die Prüfmerkmale bestimmt werden können.

## Patentansprüche

1. Verfahren zum Vorgeben von Vorgabedaten für eine Vermessung eines zu vermessenden Werkstücks (6) durch ein Koordinatenmessgerät (19) und/oder für eine Auswertung von Messergebnissen einer Vermessung eines vermessenen Werkstücks (6) durch ein Koordinatenmessgerät (19), wobei
- ein zu bestimmendes Prüfmerkmal (47), das bei der Vermessung des Werkstücks (6) vermessen und bei der Auswertung der Messergebnisse bestimmt werden soll, hinsichtlich folgender Prüfmerkmal-Eigenschaften:
a) Dimension des Prüfmerkmals,
b) Toleranzart und
c) zulässiger Toleranzbereich
festgelegt wird oder Informationen empfangen werden, durch die das zu bestimmende Prüfmerkmal (47) hinsichtlich der Prüfmerkmal-Eigenschaften a) bis c) festgelegt ist,
**dadurch gekennzeichnet, dass**
- aus einer Menge von vorhandenen Prüfmerkmalen, für die jeweils zugeordnete Daten für eine Vermessung eines Werkstücks und/oder für eine Auswertung von Messergebnissen einer Vermessung eines Werkstücks gespeichert sind, durch Ermittlung, ob ein vorgegebenes Ähnlichkeitskriterium erfüllt ist, ein dem zu bestimmenden Prüfmerkmal (47) ähnliches vorhandenes Prüfmerkmal ermittelt wird, wobei das ermittelte vorhandene Prüfmerkmal hinsichtlich zumindest einer der Prüfmerkmal-Eigenschaften nicht gleich dem zu bestimmenden Prüfmerkmal (47) ist und wobei bei der Ermittlung, ob das vorgegebene Ähnlichkeitskriterium erfüllt ist, eine Ähnlichkeit der Prüfmerkmal-Eigenschaften a) bis c) des zu bestimmenden Prüfmerkmals (47) einerseits und des vorhandenen Prüfmerkmals andererseits festgestellt wird,
- die dem ähnlichen vorhandenen Prüfmerkmal zugeordneten Daten abgerufen werden und als Vorgabedaten (27, 28) für den Ablauf der Vermessung des zu vermessenden Werkstücks (6) und/oder für den Ablauf der Auswertung von Messergebnissen der Vermessung des vermessenen Werkstücks (6) festgelegt werden.

2. Verfahren nach Anspruch 1, wobei mittels der Vorgabedaten (27) ein Ablauf der Vermessung des zu vermessenden Werkstücks (6) und/oder ein Ablauf der Auswertung von Messergebnissen der Vermessung des vermessenen Werkstücks (6) festgelegt wird.

3. Verfahren nach Anspruch 2, wobei der festgelegte Ablauf der Vermessung und/oder der festgelegte Ablauf der Auswertung der Messergebnisse ausgeführt wird/werden.

4. Verfahren nach einem der Ansprüche 1 bis 3, wobei die Vorgabedaten (27) zumindest einen Messparameter (27a, 27b, 27c), nämlich eine Art und/oder Größe eines Messsensors (4), mit dem das zu vermessende Werkstück (6) abzutasten ist, eine Scanning-Geschwindigkeit, mit der das zu vermessende Werkstück scannend abgetastet wird, eine Anzahl und/oder Verteilung von Oberflächenpunkten des zu vermessenden Werkstücks (6), die abgetastet werden sollen, und/oder eine relative Position eines abzutastenden Oberflächenpunktes und/oder Oberflächenbereichs des zu vermessenden Werkstücks (6) aufweisen.

5. Verfahren nach einem der Ansprüche 1 bis 4, wobei die Vorgabedaten (28) zumindest eine Vorgabe (28a, 28b, 28c) zur Auswertung der Messergebnisse, nämlich ein Auswerteverfahren, ein Auswertekriterium, eine Vorgabe zur Filterung der Messergebnisse und/oder eine Vorgabe zur Behandlung von nicht plausiblen Messwerten aufweisen.

6. Verfahren nach einem der Ansprüche 1 bis 5, wobei die Toleranzarten in Gruppen eingeteilt sind und bei der Ermittlung, ob das vorgegebene Ähnlichkeitskriterium erfüllt ist, eine Toleranzart des zu bestimmenden Prüfmerkmals (47) einerseits und eine Toleranzart des vorhandenen Prüfmerkmals andererseits gemäß dem vorgegebenen Ähnlichkeitskriterium als einander ähnlich festgestellt werden, wenn sie in dieselbe Gruppe eingeteilt sind.

7. Verfahren nach einem der Ansprüche 1 bis 6, wobei gemäß dem vorgegebenen Ähnlichkeitskriterium die Dimension und/oder der zulässige Toleranzbereich des zu bestimmenden Prüfmerkmals (47) einerseits und des vorhandenen Prüfmerkmals andererseits als einander ähnlich festgestellt werden, wenn ihre Differenz kleiner als ein durch das Ähnlichkeitskriterium vorgegebener Schwellwert ist, oder in einem alternativen Fall kleiner oder gleich einem durch das Ähnlichkeitskriterium vorgegebenen ersten Schwellwert ist.

8. Verfahren nach einem der Ansprüche 1 bis 7, wobei anhand des vorgegebenen Ähnlichkeitskriterium ein Grad einer Ähnlichkeit der Dimension und/oder des zulässigen Toleranzbereichs des zu bestimmenden Prüfmerkmals (47) einerseits und mehrerer vorhandener Prüfmerkmale andererseits festgestellt wird und wobei das vorgegebene Ähnlichkeitskriterium für ein ähnliches vorhandenes Prüfmerkmal erfüllt ist, wenn dessen Grad der Ähnlichkeit größer als ein zweiter vorgegebener Schwellwert ist und/oder dessen Grad der Ähnlichkeit größer als der Grad der Ähnlichkeit aller anderen vorhandenen Prüfmerkmale ist, für die der Grad der Ähnlichkeit festgestellt wurde.

9. Verfahren nach einem der Ansprüche 1 bis 8, wobei das Verfahren zum Vorgeben von Vorgabedaten (27, 28) von einem Messrechner (17) des Koordinatenmessgerätes (19) ausgeführt wird, der während der Vermessung des zu vermessenden Werkstücks (6) Messdaten der Vermessung aufnimmt und die aufgenommenen Messdaten verarbeitet.

10. Vorrichtung, insbesondere zur Ausführung des Verfahrens nach einem der Ansprüche 1 bis 9, zum Vorgeben von Vorgabedaten (27, 28) für eine Vermessung eines zu vermessenden Werkstücks (6) durch ein Koordinatenmessgerät (19) und/oder für eine Auswertung von Messergebnissen einer Vermessung eines vermessenen Werkstücks (6) durch ein Koordinatenmessgerät (19), wobei die Vorrichtung aufweist:
- eine Empfangseinrichtung, die ausgestaltet ist Informationen zu empfangen, die ein zu bestimmendes Prüfmerkmal (47), das bei der Vermessung des Werkstücks (6) vermessen und bei der Auswertung der Messergebnisse bestimmt werden soll, hinsichtlich folgender Prüfmerkmal-Eigenschaften:
a) Dimension des Prüfmerkmals,
b) Toleranzart und
c) zulässiger Toleranzbereich
festlegen,
**gekennzeichnet durch**
- eine Feststellungseinrichtung, die ausgestaltet ist aus einer Menge von vorhandenen Prüfmerkmalen, für die jeweils zugeordnete Daten für eine Vermessung eines Werkstücks und/oder für eine Auswertung von Messergebnissen einer Vermessung eines Werkstücks gespeichert sind, durch Ermittlung, ob ein vorgegebenes Ähnlichkeitskriterium erfüllt ist, ein dem zu bestimmenden Prüfmerkmal (47) ähnliches vorhandenes Prüfmerkmal zu ermitteln, wobei das ermittelte vorhandene Prüfmerkmal hinsichtlich zumindest einer der Prüfmerkmal-Eigenschaften nicht gleich dem zu bestimmenden Prüfmerkmal (47) ist und wobei bei der Ermittlung, ob das vorgegebene Ähnlichkeitskriterium erfüllt ist, eine Ähnlichkeit der Prüfmerkmal-Eigenschaften a) bis c) des zu bestimmenden Prüfmerkmals (47) einerseits und des vorhandenen Prüfmerkmals andererseits festgestellt wird,
- eine Datenabrufeinrichtung, die ausgestaltet ist die dem ähnlichen vorhandenen Prüfmerkmal zugeordneten Daten abzurufen und als Vorgabedaten (27, 28) für den Ablauf der Vermessung des zu vermessenden Werkstücks (6) und/oder für den Ablauf der Auswertung von Messergebnissen der Vermessung des vermessenen Werkstücks (6) festzustellen.

11. Vorrichtung nach Anspruch 10, wobei die Vorrichtung ausgestaltet ist, mittels der Vorgabedaten (27) einen Ablauf der Vermessung des zu vermessenden Werkstücks (6) und/oder einen Ablauf der Auswertung von Messergebnissen der Vermessung des vermessenen Werkstücks (6) festzulegen.

12. Vorrichtung nach Anspruch 11, wobei die Vorrichtung ausgestaltet ist, den festgelegten Ablauf der Vermessung zu steuern und/oder den festgelegten Ablauf der Auswertung der Messergebnisse auszuführen.

13. Vorrichtung nach einem der Ansprüche 10 bis 12, wobei die Toleranzarten in Gruppen eingeteilt sind und die Vorrichtung ausgestaltet ist, bei der Ermittlung, ob das vorgegebene Ähnlichkeitskriterium erfüllt ist, eine Toleranzart des zu bestimmenden Prüfmerkmals (47) einerseits und eine Toleranzart des vorhandenen Prüfmerkmals andererseits gemäß dem vorgegebenen Ähnlichkeitskriterium als einander ähnlich festzustellen, wenn sie in dieselbe Gruppe eingeteilt sind.

14. Vorrichtung nach einem der Ansprüche 10 bis 13, wobei die Vorrichtung ausgestaltet ist, gemäß dem vorgegebenen Ähnlichkeitskriterium die Dimension und/oder den zulässigen Toleranzbereich des zu bestimmenden Prüfmerkmals (47) einerseits und des vorhandenen Prüfmerkmals andererseits als einander ähnlich festzustellen, wenn ihre Differenz kleiner als ein durch das Ähnlichkeitskriterium vorgegebener Schwellwert ist, oder in einem alternativen Fall kleiner oder gleich einem durch das Ähnlichkeitskriterium vorgegebenen ersten Schwellwert ist.

15. Vorrichtung nach einem der Ansprüche 10 bis 14, wobei die Vorrichtung ausgestaltet ist, anhand des vorgegebenen Ähnlichkeitskriterium einen Grad einer Ähnlichkeit der Dimension und/oder des zulässigen Toleranzbereichs des zu bestimmenden Prüfmerkmals (47) einerseits und mehrerer vorhandener Prüfmerkmale andererseits festzustellen, wobei das vorgegebene Ähnlichkeitskriterium für ein ähnliches vorhandenes Prüfmerkmal erfüllt ist, wenn dessen Grad der Ähnlichkeit größer als ein zweiter vorgegebener Schwellwert ist und/oder dessen Grad der Ähnlichkeit größer als der Grad der Ähnlichkeit aller anderen vorhandenen Prüfmerkmale ist, für die der Grad der Ähnlichkeit festgestellt wurde.

16. Vorrichtung nach einem der Ansprüche 10 bis 15, wobei die Vorrichtung ein Messrechner (17) des Koordinatenmessgerätes (19) ist, der während der Vermessung des zu vermessenden Werkstücks (6) Messdaten der Vermessung aufnimmt und die aufgenommenen Messdaten verarbeitet.

## Claims

1. Method for specifying specification data for measuring a workpiece (6) to be measured by means of a coordinate measuring machine (19) and/or for evaluating measurement results of a measurement of a measured workpiece (6) by means of a coordinate measuring machine (19), wherein
- an inspection feature (47) to be determined, which is intended to be measured when measuring the workpiece (6) and is intended to be determined when evaluating the measurement results, is stipulated with regard to the following inspection feature properties:
a) dimension of the inspection feature,
b) tolerance type and
c) permissible tolerance range,
or information which is used to stipulate the inspection feature (47) to be determined with regard to inspection feature properties a) to c) is received,
**characterized in that**
- an available inspection feature similar to the inspection feature (47) to be determined is determined from a set of available inspection features, for which respectively associated data for measuring a workpiece and/or for evaluating measurement results of a measurement of a workpiece are stored, by determining whether a specified similarity criterion has been met, wherein the determined available inspection feature is not the same as the inspection feature (47) to be determined with regard to at least one of the inspection feature properties, and wherein a similarity of inspection feature properties a) to c) of the inspection feature (47) to be determined, on the one hand, and of the available inspection feature, on the other hand, is determined when determining whether the specified similarity criterion has been met,
- the data associated with the similar available inspection feature are retrieved and are stipulated as specification data (27, 28) for the procedure of measuring the workpiece (6) to be measured and/or for the procedure of evaluating measurement results of the measurement of the measured workpiece (6).

2. Method according to Claim 1, wherein the specification data (27) are used to stipulate a procedure of measuring the workpiece (6) to be measured and/or a procedure of evaluating measurement results of the measurement of the measured workpiece (6).

3. Method according to Claim 2, wherein the stipulated measurement procedure and/or the stipulated procedure of evaluating the measurement results are/is carried out.

4. Method according to one of Claims 1 to 3, wherein the specification data (27) have at least one measurement parameter (27a, 27b, 27c), namely a type and/or size of a measurement sensor (4) used to sense the workpiece (6) to be measured, a scanning speed at which the workpiece to be measured is sensed by scanning, a number and/or distribution of surface points of the workpiece (6) to be measured which are intended to be sensed, and/or a relative position of a surface point and/or surface region to be sensed of the workpiece (6) to be measured.

5. Method according to one of Claims 1 to 4, wherein the specification data (28) have at least one specification (28a, 28b, 28c) for evaluating the measurement results, namely an evaluation method, an evaluation criterion, a specification for filtering the measurement results and/or a specification for handling implausible measured values.

6. Method according to one of Claims 1 to 5, wherein the tolerance types are classified in groups and, when determining whether the specified similarity criterion has been met, a tolerance type of the inspection feature (47) to be determined, on the one hand, and a tolerance type of the available inspection feature, on the other hand, are determined to be similar to one another according to the specified similarity criterion if they have been classified in the same group.

7. Method according to one of Claims 1 to 6, wherein the dimension and/or the permissible tolerance range of the inspection feature (47) to be determined, on the one hand, and of the available inspection feature, on the other hand, are/is determined to be similar to one another according to the specified similarity criterion if their difference is less than a threshold value specified by the similarity criterion or, in an alternative case, is less than or equal to a first threshold value specified by the similarity criterion.

8. Method according to one of Claims 1 to 7, wherein a degree of similarity of the dimension and/or of the permissible tolerance range of the inspection feature (47) to be determined, on the one hand, and of a plurality of available inspection features, on the other hand, is determined on the basis of the specified similarity criterion, and wherein the specified similarity criterion has been met for a similar available inspection feature if its degree of similarity is greater than a second specified threshold value and/or its degree of similarity is greater than the degree of similarity of all other available inspection features for which the degree of similarity has been determined.

9. Method according to one of Claims 1 to 8, wherein the method for specifying specification data (27, 28) is carried out by a measurement computer (17) of the coordinate measuring machine (19), which computer acquires measurement data of the measurement during the measurement of the workpiece (6) to be measured and processes the acquired measurement data.

10. Apparatus, in particular for carrying out the method according to one of Claims 1 to 9, for specifying specification data (27, 28) for measuring a workpiece (6) to be measured by means of a coordinate measuring machine (19) and/or for evaluating measurement results of a measurement of a measured workpiece (6) by means of a coordinate measuring machine (19), wherein the apparatus has:
- a receiving device which is configured to receive information which stipulates an inspection feature (47) to be determined, which is intended to be measured when measuring the workpiece (6) and is intended to be determined when evaluating the measurement results, with regard to the following inspection feature properties:
a) dimension of the inspection feature,
b) tolerance type and
c) permissible tolerance range,
**characterized by**
- a determination device which is configured to determine an available inspection feature similar to the inspection feature (47) to be determined from a set of available inspection features, for which respectively associated data for measuring a workpiece and/or for evaluating measurement results of a measurement of a workpiece are stored, by determining whether a specified similarity criterion has been met, wherein the determined available inspection feature is not the same as the inspection feature (47) to be determined with regard to at least one of the inspection feature properties, and wherein a similarity of inspection feature properties a) to c) of the inspection feature (47) to be determined, on the one hand, and of the available inspection feature, on the other hand, is determined when determining whether the specified similarity criterion has been met,
- a data retrieval device which is configured to retrieve the data associated with the similar available inspection feature and to stipulate them as specification data (27, 28) for the procedure of measuring the workpiece (6) to be measured and/or for the procedure of evaluating measurement results of the measurement of the measured workpiece (6).

11. Apparatus according to Claim 10, wherein the apparatus is configured to stipulate a procedure of measuring the workpiece (6) to be measured and/or a procedure of evaluating measurement results of the measurement of the measured workpiece (6) by means of the specification of the data (27).

12. Apparatus according to Claim 11, wherein the apparatus is configured to control the stipulated measurement procedure and/or to carry out the stipulated procedure of evaluating the measurement results.

13. Apparatus according to one of Claims 10 to 12, wherein the tolerance types are classified in groups and, when determining whether the specified similarity criterion has been met, the apparatus is configured to determine a tolerance type of the inspection feature (47) to be determined, on the one hand, and a tolerance type of the available inspection feature, on the other hand, to be similar to one another according to the specified similarity criterion if they have been classified in the same group.

14. Apparatus according to one of Claims 10 to 13, wherein the apparatus is configured to determine the dimension and/or the permissible tolerance range of the inspection feature (47) to be determined, on the one hand, and of the available inspection feature, on the other hand, to be similar to one another according to the specified similarity criterion if their difference is less than a threshold value specified by the similarity criterion or, in an alternative case, is less than or equal to a first threshold value specified by the similarity criterion.

15. Apparatus according to one of Claims 10 to 14, wherein the apparatus is configured to determine a degree of similarity of the dimension and/or of the permissible tolerance range of the inspection feature (47) to be determined, on the one hand, and of a plurality of available inspection features, on the other hand, on the basis of the specified similarity criterion, wherein the specified similarity criterion has been met for a similar available inspection feature if its degree of similarity is greater than a second specified threshold value and/or its degree of similarity is greater than the degree of similarity of all other available inspection features for which the degree of similarity has been determined.

16. Apparatus according to one of Claims 10 to 15, wherein the apparatus is a measurement computer (17) of the coordinate measuring machine (19), which computer acquires measurement data of the measurement during the measurement of the workpiece (6) to be measured and processes the acquired measurement data.

## Revendications

1. Procédé pour prédéfinir des données prescrites pour un mesurage d'une pièce (6) à mesurer par un appareil de mesure de coordonnées (19) et/ou pour une interprétation de résultats de mesure d'un mesurage d'une pièce (6) mesurée par un appareil de mesure de coordonnées (19), selon lequel
- une caractéristique de contrôle (47) à déterminer, laquelle est mesurée lors du mesurage de la pièce (6) et doit être déterminée lors de l'interprétation des résultats de mesure, est fixée du point de vue des propriétés de caractéristique de contrôle suivantes :
a) dimensions de la caractéristique de contrôle,
b) type de tolérance et
c) plage de tolérances admissible
ou des informations sont reçues, par lesquelles la caractéristique de contrôle (47) à déterminer est fixée du point de vue des propriétés de caractéristique de contrôle a) à c),
**caractérisé en ce que**
- une caractéristique de contrôle présente similaire à la caractéristique de contrôle (47) à déterminer est identifiée à partir d'une pluralité de caractéristiques de contrôle présentes, pour lesquelles sont respectivement mémorisées des données associées pour un mesurage d'une pièce et/ou pour une interprétation de résultats de mesure d'un mesurage d'une pièce, en identifiant si un critère de similitude prédéfini est rempli, la caractéristique de contrôle présente identifiée n'étant pas égale à la caractéristique de contrôle (47) à déterminer du point de vue d'au moins l'une des propriétés de caractéristique de contrôle et lors de l'action d'identifier si le critère de similitude prédéfini est rempli, une similitude des propriétés de caractéristique de contrôle a) à c) de la caractéristique de contrôle (47) à déterminer d'une part et de la caractéristique de contrôle présente d'autre part est fixée,
- les données associées à la caractéristique de contrôle présente similaire sont invoquées et fixées en tant que données prescrites (27, 28) pour le déroulement du mesurage de la pièce (6) à mesurer et/ou pour le déroulement de l'interprétation de résultats de mesure du mesurage de la pièce (6) à mesurer.

2. Procédé selon la revendication 1, un déroulement du mesurage de la pièce (6) à mesurer et/ou un déroulement de l'interprétation de résultats de mesure du mesurage de la pièce (6) à mesurer étant fixé au moyen des données prescrites (27).

3. Procédé selon la revendication 2, le déroulement fixé du mesurage et/ou le déroulement fixé de l'interprétation des résultats de mesure étant exécuté (s).

4. Procédé selon l'une des revendications 1 à 3, les données prescrites (27) comprenant au moins un paramètre de mesure (27a, 27b, 27c), à savoir un type et/ou une taille d'un capteur de mesure (4) avec lequel doit être palpée la pièce (6) à mesurer, une vitesse de balayage avec laquelle doit être palpée par balayage la pièce à mesurer, un nombre et/ou une distribution de points de surface de la pièce (6) à mesurer qui doivent être palpés et/ou une position relative d'un point de surface et/ou d'une zone de surface à palper de la pièce (6) à mesurer.

5. Procédé selon l'une des revendications 1 à 4, les données prescrites (28) comprenant au moins une prescription (28a, 28b, 28c) pour l'interprétation des résultats de mesure, à savoir un procédé d'interprétation, un critère d'interprétation, une prescription pour filtrer les résultats de mesure et/ou une prescription pour gérer des valeurs mesurées non plausibles.

6. Procédé selon l'une des revendications 1 à 5, les types de tolérances étant répartis dans des groupes et lors de l'action consistant à identifier si le critère de similitude prédéfini est rempli, un type de tolérance de la caractéristique de contrôle (47) à déterminer d'une part et un type de tolérance de la caractéristique de contrôle présente d'autre part étant fixés de manière à être similaire l'un à l'autre conformément au critère de similitude prédéfini si ceux-ci sont répartis dans le même groupe.

7. Procédé selon l'une des revendications 1 à 6, la dimension et/ou la plage de tolérances admissible de la caractéristique de contrôle (47) à déterminer d'une part et de la caractéristique de contrôle présente d'autre part étant fixées de manière à être similaires l'une à l'autre conformément au critère de similitude prédéfini lorsque leur différence est inférieure à une valeur de seuil prédéfinie par le critère de similitude ou, dans un cas alternatif, inférieure ou égale à une première valeur de seuil prédéfinie par le critère de similitude.

8. Procédé selon l'une des revendications 1 à 7, un degré d'une similitude de la dimension et/ou de la plage de tolérances admissible de la caractéristique de contrôle (47) à déterminer d'une part et de plusieurs caractéristiques de contrôle présentes d'autre part étant fixé à l'aide du critère de similitude prédéfini et le critère de similitude prédéfini étant rempli pour une caractéristique de contrôle présente similaire lorsque son degré de similitude est supérieur à une deuxième valeur de seuil prédéfinie et/ou son degré de similitude est supérieur au degré de similitude de toutes les autres caractéristiques de contrôle présentes pour lesquelles le degré de similitude a été fixé.

9. Procédé selon l'une des revendications 1 à 8, le procédé pour prédéfinir des données prescrites (27, 28) étant mis en oeuvre par un ordinateur de mesure (17) de l'appareil de mesure de coordonnées (19), lequel enregistre les données de mesure du mesurage pendant le mesurage de la pièce (6) à mesurer et traite les données de mesure enregistrées.

10. Arrangement, notamment pour mettre en oeuvre le procédé selon l'une des revendications 1 à 9, pour prédéfinir des données prescrites (27, 28) pour un mesurage d'une pièce (6) à mesurer par un appareil de mesure de coordonnées (19) et/ou pour une interprétation de résultats de mesure d'un mesurage d'une pièce (6) mesurée par un appareil de mesure de coordonnées (19), l'arrangement comprenant :
- un dispositif de réception, qui est configuré pour recevoir des informations qui fixent, du point de vue des propriétés de caractéristique de contrôle ci-après, une caractéristique de contrôle (47) à déterminer, laquelle est mesurée lors du mesurage de la pièce (6) et doit être déterminée lors de l'interprétation des résultats de mesure :
a) dimensions de la caractéristique de contrôle,
b) type de tolérance et
c) plage de tolérances admissible,
**caractérisé par**
- un dispositif de fixation qui est configuré pour identifier une caractéristique de contrôle présente similaire à la caractéristique de contrôle (47) à déterminer à partir d'une pluralité de caractéristiques de contrôle présentes, pour lesquelles sont respectivement mémorisées des données associées pour un mesurage d'une pièce et/ou pour une interprétation de résultats de mesure d'un mesurage d'une pièce, en identifiant si un critère de similitude prédéfini est rempli, la caractéristique de contrôle présente identifiée n'étant pas égale à la caractéristique de contrôle (47) à déterminer du point de vue d'au moins l'une des propriétés de caractéristique de contrôle et lors de l'action consistant à identifier si le critère de similitude prédéfini est rempli, une similitude des propriétés de caractéristique de contrôle a) à c) de la caractéristique de contrôle (47) à déterminer d'une part et de la caractéristique de contrôle présente d'autre part est fixée,
- un dispositif d'invocation de données, qui est configuré pour invoquer les données associées à la caractéristique de contrôle présente similaire et les fixer en tant que données prescrites (27, 28) pour le déroulement du mesurage de la pièce (6) à mesurer et/ou pour le déroulement de l'interprétation de résultats de mesure du mesurage de la pièce (6) à mesurer.

11. Arrangement selon la revendication 10, l'arrangement étant configuré pour fixer, au moyen des données prescrites (27), un déroulement du mesurage de la pièce (6) à mesurer et/ou un déroulement de l'interprétation de résultats de mesure du mesurage de la pièce (6) à mesurer.

12. Arrangement selon la revendication 11, l'arrangement étant configuré pour commander le déroulement fixé du mesurage et/ou exécuter le déroulement fixé de l'interprétation de résultats de mesure.

13. Arrangement selon l'une des revendications 10 à 12, les types de tolérances étant répartis dans des groupes et l'arrangement étant configuré pour, lors de l'action consistant à identifier si le critère de similitude prédéfini est rempli, fixer un type de tolérance de la caractéristique de contrôle (47) à déterminer d'une part et un type de tolérance de la caractéristique de contrôle présente d'autre part de manière à ce qu'ils soient similaires l'un à l'autre conformément au critère de similitude prédéfini si ceux-ci sont répartis dans le même groupe.

14. Arrangement selon l'une des revendications 10 à 13, l'arrangement étant configuré pour fixer la dimension et/ou la plage de tolérances admissible de la caractéristique de contrôle (47) à déterminer d'une part et de la caractéristique de contrôle présente d'autre part de manière à ce qu'elles soient similaires l'une à l'autre conformément au critère de similitude prédéfini lorsque leur différence est inférieure à une valeur de seuil prédéfinie par le critère de similitude ou, dans un cas alternatif, inférieure ou égale à une première valeur de seuil prédéfinie par le critère de similitude.

15. Arrangement selon l'une des revendications 10 à 14, l'arrangement étant configuré pour fixer un degré d'une similitude de la dimension et/ou de la plage de tolérances admissible de la caractéristique de contrôle (47) à déterminer d'une part et de plusieurs caractéristiques de contrôle présentes d'autre part à l'aide du critère de similitude prédéfini, le critère de similitude prédéfini étant rempli pour une caractéristique de contrôle présente similaire lorsque son degré de similitude est supérieur à une deuxième valeur de seuil prédéfinie et/ou son degré de similitude est supérieur au degré de similitude de toutes les autres caractéristiques de contrôle présentes pour lesquelles le degré de similitude a été fixé.

16. Arrangement selon l'une des revendications 10 à 15, l'arrangement étant un ordinateur de mesure (17) de l'appareil de mesure de coordonnées (19), lequel enregistre les données de mesure du mesurage pendant le mesurage de la pièce (6) à mesurer et traite les données de mesure enregistrées.
